# EUROPEAN PATENT SPECIFICATION

(11) **EP 0 752 906 B1**
(45) Date of publication and mention of the grant of the patent: **06.05.1998**
(21) Application number: 95914680.4
(22) Date of filing: 27.02.1995
(51) Int. Cl.: B01D 46/42, B01D 46/10, B01D 46/52

(54) **FILTER ARRANGEMENT FOR FILTRATION OF A FLUID FLOW**
FILTERANORDNUNG ZUM FILTERN EINER FLUIDSTRÖMUNG
APPAREIL DE FILTRATION D'UN ECOULEMENT FLUIDIQUE

(30) Priority: 30.03.1994 DE 9405390 U
(43) Date of publication of application: 15.01.1997
(73) Proprietor: MINNESOTA MINING AND MANUFACTURING COMPANY, St. Paul, Minnesota 55133-3427 (US)
(72) Inventor: DOMINIAK, Klaus, D-45695 Recklinghausen (DE); POMPLUN, Klaus, D-59192 Bergkamen (DE)
(74) Representative: Hilleringmann, Jochen, Dipl.-Ing.
(86) International application number: US9502405
(87) International publication number: WO9526802

(56) References cited:
- EP-A- 0 329 544
- GB-A- 2 179 872
- US-A- 3 942 964
- US-A- 5 222 488
- US-A- 5 273 563
- PATENT ABSTRACTS OF JAPAN vol. 12 no. 275 (C-516) ,29 July 1988 & JP,A,63 054911 (MIRUMACHI MITSUAKI) 9 March 1988,

## Description

The invention is directed to a filter arrangement for filtration of a fluid flow, comprising at least one first filter element and at least one second filter element, said first and second filter elements being arranged behind each other in the flow direction, and comprising a holding means provided for holding said at least two filter elements and including at least one first and one second holding member which can be connected to each other on their abutment faces as basically known from EP-A-0 329 544 and Patent Abstracts of Japan vol. 12 no. 275 (C-516), 29 July 1988 & JP-A-63 054911.

Filter arrangements of the above type are used primarily in the automobile industry for filtration of the air flowing into the passenger cabin. Alternatively, the above filter arrangements can be used for other fluids, i.e., for gas and liquid flows.

When used for filtration of an air flow in an automobile, the above described filter arrangement usually comprises a first filter element which serves as a particle filter, i.e., operates mechanically and/or electronically, and additionally a second filter element which is an (odor) adsorption filter and operates chemically. For holding the two filter elements attached to each other, the filter arrangement is provided with a holding means which necessarily consists of two parts, i.e., comprises at least two holding members adapted to be connected to each other. After positioning the two filter elements, the holding means is assembled, with the holding members of the holding means being adhesively connected or if the holding members are made from a plastic material welded to each other.

Filter arrangements of the above type are also known, e.g., from US-A-4,714,486, DE-A-37 16 243 and EP-A-0 082 106. In such filter arrangements provided with a two-part holding means, problems are caused by the necessity to attach the holding members of the holding means to each other in an air-tight or fluid-tight manner. If this joint connection is realized by adhesion, welding or ultrasonic welding, the assembly process becomes quite complex, with a resultant increase in production costs.

It is an object of the present invention to provide a filter arrangement for filtration of a fluid flow wherein the particularly fluid-tight connection of the holding members of the holding means to each other can be realized in a simple manner to facilitate the assembly process.

According to the invention, this object is solved by means of a filter arrangement having the features of claim 1. The subclaims relate to preferred embodiments.

According to the invention, a filter arrangement of the above type is described wherein the at least two holding members of the holding means comprise first and second snap-connection members for providing a locking connection between the at least two holding members on their abutment faces which abut each other in the connected state.

The holding means of the filter arrangement of the invention is provided with a snap connection for connecting the holding members to each other. The snap connection comprises first and second snap connection members. The first snap connection members are formed on one holding member and the second snap connection members are formed on the other holding member of the holding means which is to be connected to said one holding member. The snap connection provides for self-locking connection of the at least two holding members which in the connected state have their abutment faces abutting each other in tightly sealed relationship. In the filter arrangement of the invention, it is merely required to mechanically move the two to-be-connected holding members against each other until the snap connection is locked. Additional measures such as adhesive connection or (ultrasonic) welding are not required so that the filter arrangement of the invention is relatively easily assembled.

Generally, the snap connection may be releasable or may not be releasable, i.e., be provided as a permanent connection. The releasable connection between the two snap connection members offers the advantage that the adsorption filter element and/or the particle filter element can be exchanged if the element(s) is (are) held by the holding means without being fixedly attached to the holding members thereof.

The snap connection members are substantially of complementary shape relative to each other and one snap connection member has at least one projection formed thereon which, in the connected state of the holding members, is sunk into at least one recess of the other snap connection member associated to said projection. This arrangement of the snap connection members results in a labyrinthipe configuration of the mutually abutting abutment faces of the two holding members. Therefore, the snap connection, besides offering a good mechanical connection between the two holding members, provides for a high flow resistance so that fluid flowing through the filter elements can hardly leak out between the abutting abutment faces of the holding members.

One of the snap connection members comprises a substantially V-shaped recess having undercut regions or recessed portions formed in its flanks, and the other snap connection member comprises a substantially V-shaped projection having protrusions formed on its flanks. When the V-shaped projection is positioned in the V-shaped recess, said protrusions are sunk in said undercut regions (recessed portions). Both snap connection members can be provided with a plurality of such V-shaped projections or V-shaped recesses. Preferably, the protrusions are rounded protrusions; accordingly, also the undercut regions are rounded. Suitably, the protrusions and the undercut regions have complementary shape. The V-shape of the snap connection facilitates the assembly of the two holding members because this V-shape provides for a self-entering effect of the two holding members.

For preventing that fluid possibly leaking through the snap connection will escape unfiltered or incompletely filtered, the abutment faces of the two holding members are preferably arranged substantially downstream of the last filter element in the flow direction. In this manner, it is safeguarded that possibly escaping fluid will at least be filtered.

Preferably, the V-shaped projection is shorter than the depth of the V-shaped recess. Advantageously, this allows a reliable locking engagement between the protrusions and the undercut regions also in the case of tolerances. Preferably, the tip of the V-shaped projection is rounded and in the connected state of the two holding members is located at a distance from the bottom of the V-shaped recess.

The flanks of the V-shaped projection and the V-shaped recess preferably extend at the same angle relative to other. In other words, each flank of the V-shaped projection runs parallel to the confronting flank of the V-shaped recess in the assembled state of the two holding members.

The above described snap connection can be formed along the complete abutment faces of both holding members. However, the snap connection can comprise a plurality of mutually spaced V-shaped projections and V-shaped recesses.

The holding means is preferably made from a flexible plastic material, in particular polypropylene. In this case, the flanks of the V-shaped recess(es) arranged on one of the two holding members are inherently elastic due to their material. As an alternative or additional measure, also the V-shaped projection(s) can be elastic.

Preferably, one of the two holding members is a frame member defining an opening and particularly surrounding both of the filter elements. In this case, the second holding member is formed as an annular member which likewise defines an opening. However, this opening is smaller than the opening of the frame member. Said annular member can be mounted to one of the two smaller sides or edges of the thin frame member. The annular member comprises an annular portion which has the first or second snap connection member arranged therein and which is provided with a projecting portion reducing the opening of the annular member. Said projecting portion can be formed, e.g., as a surrounding flange projecting inwardly, or as transverse webs bridging the openings of the annular portion. In this manner, the two filter elements are kept attached to each other by the two connected holding member.

Preferably, the first filter element is a mechanical particle filter element, which particularly is pleated in a zig-zag shaped pattern, and the second filter element is a chemical adsorption filter element. The particle filter element preferably is provided with a reticular support structure of a plastic material for holding a non-woven filter layer for particle filtration which is attached to said reticular support structure. Both of these components preferably consist of plastic and particularly of polypropylene. For the adsorption filter element, preferred use is made of an active carbon layer. The active carbon layer can comprise individual active carbon particles of a relatively coarse grain size which are molded to each other or are locally connected to each other in some other manner. on both sides of the active carbon layer, there can be arranged a non woven cover layer, particularly made from plastic and preferably from polypropylene.

Preferably, the particle filter element is tightly connected to one of the two holding members. This holding member protrudes beyond the downstream outlet side of the particle filter element in such a manner that the holding member laterally encloses or surrounds at least part of the adsorption filter element arranged at the flow outlet side of the particle filter element. The second holding member merely has the function to hold the adsorption filter element in abutment on the particle filter element. If necessary, spacers or other parts possibly required for flow filtration or flow guidance can be arranged between the two filter elements.

Also for mounting the filter arrangement, the above mentioned connection of one of the filter elements, particularly of the particle filter element, to one of the holding members is advantageous. This connection can be provided, e.g., by adhesion. However, from the viewpoint of production technology, it is more favorable to mold this holding member to the particle filter element. This can be realized, e.g., by use of an insert molding process. In this case, the particle filter element is held by an inner insert mold while laterally protruding beyond said insert mold, so that material for the holding member injected from outside against the insert mold is connected to the projecting region of the particle filter element.

The fluid flow mentioned in the above description is maintained by a suitable means provided for this purpose. For instance, this means can be a blower or a similar device which in this case will blow air through the filter arrangement. In the description of the present invention, the term "Means" is used in a very wide sense; it denotes all possible devices and circumstances which generate a (fluid) flow passing through the filter arrangement. Ultimately, also a vehicle provided with the filter arrangement of the invention is considered a means according to the above definition because the air flow generated by movement of the vehicle will pass through the filter arrangement.

An embodiment of the invention will be explained in greater detail hereunder with reference to the accompanying drawings.
Fig. 1 is a perspective view of a filter arrangement comprising a particle filter element and an adsorption filter element as used, e.g., in motor vehicles for filtration of the air flowing into the passenger cabin,
Fig. 2 is a sectional view, along the line II-II of Fig. 1, of the rear half of the holding means of the filter arrangement in the flow direction,
Fig. 3 is a view similar to Fig. 2, showing the two holding members in mutually spaced condition, and
Fig. 4 is a sectional view, along the line IV-IV of Fig. 1, of the front end of the holding means of the filter arrangement in the flow direction.

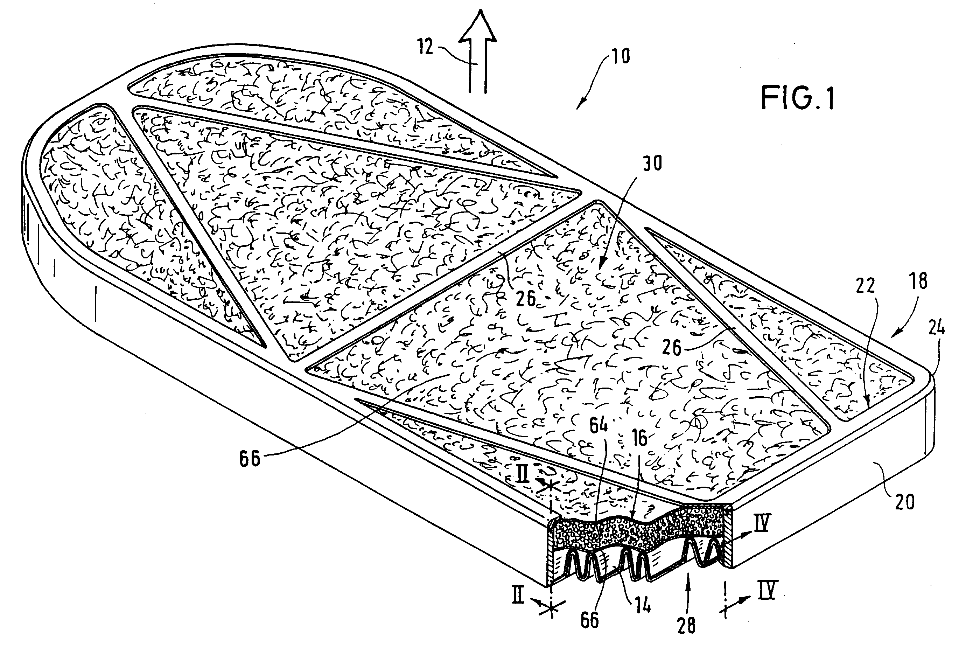

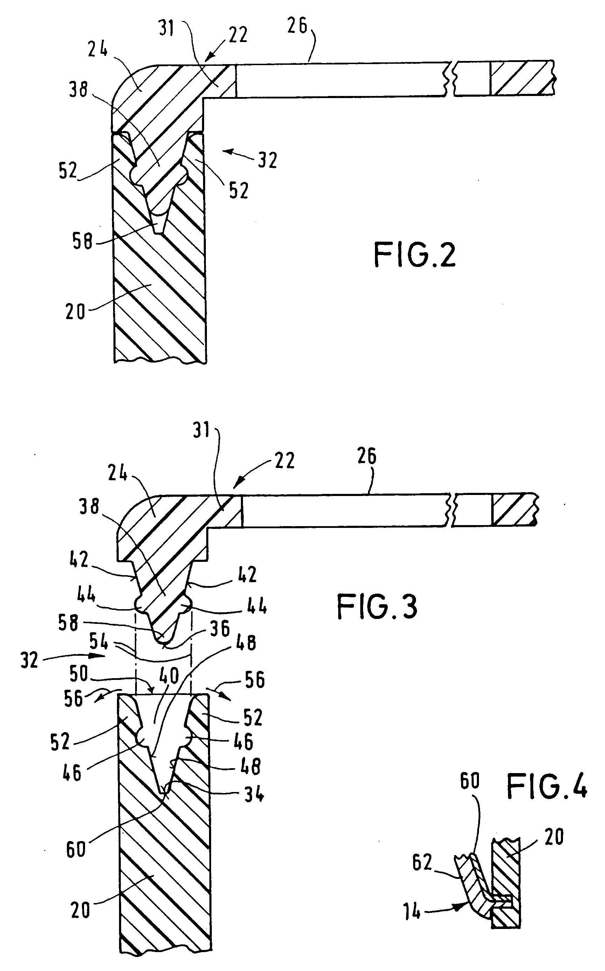

Fig. 1 is a perspective and partially broken view of a filter arrangement 10 for the filtration of air flowing in the direction of arrow 12. Filter arrangement 10 comprises a particle filter element 14 pleated in zig-zag-shaped configuration and an adsorption filter element 16 provided as a layer of active carbon particles. When viewed in the flow direction 12, the zig-zag-shaped filter element 14 is arranged before the adsorption filter element 16. Both filter elements 14 and 16 are held by a holding means 18 which is a holding frame surrounding the two filter elements 14 and 16. As evident from the Figures, holding means 18 comprises two holding members 20 and 22. Holding member 20 is provided as a surrounding frame portion, and holding member 22 is provided as an annular portion 24 which corresponds to the form of the frame portion and comprises a plurality of transverse webs 26 integrally connected to annular portion 24. Both holding members 20 and 22 define openings 28 and 30 forming the flow intake and flow outlet sides of filter arrangement 10. The surface area of opening 30 of holding member 22 is smaller than that of opening 28 of holding member 20 because annular portion 24 projects inwardly beyond opening 28 defined by holding member 22 as shown at 31 (cf. Figs. 2 and 3). This projecting region in combination with the transverse webs 26 provides for abutment of the adsorption filter element 16 on the air outlet side of the zig-zag-shaped filter element 14.

The interface between the two holding members 20 and 22 will be explained in greater detail with reference to Figs. 2 and 3. Fig. 2 shows the two holding members 20 and 22 in the assembled condition, and Fig. 3 shows the two holding members 20 and 22 when spaced apart from each other. The two holding members 20 and 22 are connected to each other by a snap connection 32. Snap connection 32 is provided on the two abutment faces 34 and 36 of the two holding members 20 and 22 (cf. Fig. 3). In the region of snap connection 32, the abutment face 36 of holding member 22 is formed with a projection 38 of V-shaped or wedge-shaped cross section, and the abutment face 34 of frame-shaped holding member 20 is formed with a V-shaped or wedge-shaped recess 40. The flanks 42 of projection 38 are respectively provided with a substantially semicircular protrusion 44. Complementary recessed portions 46 corresponding to said protrusions 44 are formed on the flanks 48 of V-shaped recess 40. V-shaped recess 40 is formed in the upper small, side 50 of frame element 20. Thus, this holding member 20 has two tapering projections 52 formed on its end facing towards holding member 22.

The surrounding V-shaped recess 40 formed in holding member 20 in the upper smaller side 50 thereof receives the likewise surrounding V-shaped projection 38 formed on the annular portion 24 of annular holding member 22. The width of V-shaped projection 38 at the height of the lateral protrusions 44 of projection 38 is selected to be slightly smaller than the width of the opening of V-shaped recess 40 (cf. the interrupted lines 54 in Fig. 3). When the holding member 22 with its projection 38 is pressed into V-shaped recess 40, the projections 52 elastically deform in outward direction (cf. arrows 56 in Fig. 3). Since the whole holding frame means 18 is made from an elastically deformable plastic material, the two projections 52 will snap back at the same moment when, while pressing projection 38 into V-shaped recess 40, the protrusions 44 of projection 38 are immersed into the recessed portions 46 of V-shaped recess 40. Thus, the snap-in connection of the two holding members 20 and 22 is established (cf. Fig. 2). For precluding that the front end 57 will abut on the bottom 58 of V-shaped recess 40 before the protrusions 44 are sunk into the recessed portions 46, the distance between the protrusions 44 and the front end 57 of projection 38 is smaller than the distance between the recessed portions 46 and the bottom 58 of V-shaped recess 40. Thus, a clearing 59 remains between the rounded front end 57 and the bottom 58 in the locked condition of the two holding members 20 and 22 (cf. Fig. 2).

As evident from Fig. 2, the abutment faces of the two holding members 20 and 22 between the interior and the exterior of holding means 18 follow a labyrinthine pattern, with a plurality of bends being provided in the course of the abutment faces. This measure contributes to the reliable air-tight closure between the two holding members 20 and 22. Therefore, secondary flow paths through the snap connection 32 are practically excluded.

Fig. 4 shows the configuration of the particle filter element 14 and its connection to the frame shaped holding member 20. Particle filter element 14 comprises a reticular plastic support structure 60, made from polypropylene and pleated to have a zig-zag shape, which carries a non-woven filter layer 62 comprising plastic fibers likewise made from polypropylene. Preferably, the material for the non-woven filter layer 62 is an electret material. The frame-shaped holding member 20 is produced by injection molding around the edges of the reticular support structure 60 and the non-woven filter layer 62 and is connected to the particle filter element 14.

For this purpose, use is made of an insert injection molding procedure. This injection molding technique is known to the expert and thus need not be explained in further detail.

The adsorption filter element 16 shown in Fig. 1 comprises an active carbon layer 64 which consists of individual coarse-grained active carbon particles connected to each other by adhesion or in some other suitable manner. On both sides of layer 64, a nonwoven cover layer 66 is arranged. As seen in Fig. 1, the adsorption filter element 16 is lying on the zig-zag shaped filter element 14 or on the air-outlet side thereof.

### Example

A filter arrangement 10 according to the embodiment shown in Figs. 1 to 4 comprised a thermoplastic reticular support structure 60 of polypropylene. Reticular support structure 60 had substantially quadratic openings formed therein, with the length of their edges being about 3 mm. The reticular support structure 60 had a thickness of about 0.64 mm, and the grid bars between the openings had a width of substantially 0.84 mm. The material of the non-woven filter layer 62 was an electret material, in particular a non-woven made from needle-tacked polypropylene fibers having an average fiber thickness of about 40 to 50 pm. By methods known to the expert, these fibers were given electret properties. The connection between non-woven filter layer 62 and reticular support structure 60 was established by adhesion.

The zig-zag-shaped pleated filter element 14 had a height of substantially 1 to 1.5 cm. This filter element 14 had an active carbon layer 64 resting thereon, having a thickness of about 1 cm and comprising active carbon particles of an average diameter of 2 to 4 mm. On both sides of layer 64, there was arranged a non-woven cover layer 66 which consisted of a fibrous non-woven made from thermally interconnected polypropylene fibers having an average fiber thickness of about 40 to 50 pm. The nonwoven cover layers 66 rested solely on the active carbon layer 64 and were kept attached thereto by being hooked with the active carbon particles having rough surfaces.

The particle filter element 14 had a frame-shaped holding member 20 of polypropylene molded therearound. This holding member had a height of about 2.5 cm. The thickness of the frame was about 3 mm. The V-shaped recess 40 of holding member 20 had an opening width of about 2 mm, which was also the maximum width of the V-shaped projection 38 of the (upper) holding member 22. Holding member 22 had a height of about 2 mm while the thickness of its webs 26 was about 1 mm. The overall dimensions of filter arrangement 10 were about 360 cm x 180 cm.

## Claims

1. A filter arrangement for filtration of a fluid flow, comprising
- a first filter element (14),
- at least one second filter element (16),
- said at least two filter elements (14,16) being arranged behind each other in the flow direction (12), and
- a holding means (18) for holding the at least two filter elements (14,16), said holding means (18) including at least one first and one second holding member (20,22) which can be connected to each other on abutment faces thereof, characterized in that
- the at least two holding members (20,22) of the holding means (18) comprise first and second snap connection members (38,40) for providing a locking connection between the at least two holding members (20,22) in their abutment faces which abut each other in the connected state
- one snap connection member comprises at least one substantially V-shaped recess (40) having flanks (48) with at least one recessed portion (46) formed therein,
- the other snap connection member comprises at least one substantially V-shaped projection (38) having flanks (42) with at least one protrusion (44) formed thereon, and
- when a V-shaped projection (38) is sunk in a V-shaped recess (40), said at least one protrusion (44) of the projection (38) is located in said at least one recessed portion (46) of the V-shaped recess (40).

2. The filter arrangement according to claim 1, characterized in that the V-shaped projection (38) is shorter than the depth of the V-shaped recess (40).

3. The filter arrangement according to claim 1 or 2, characterized in that the flanks (42) of the V-shaped projection (38) and the flanks (48) of the V-shaped recess (40) are arranged at substantially identical angles relative to each other.

4. The filter arrangement according to any one of claims 1 to 3, characterized in that the snap connection members along the abutment faces of the at least two holding members (20,22) are formed continuously.

5. The filter arrangement according to any one of claims 1 to 4, characterized in that the at least two holding members (20,22) are made of plastic.

6. The filter arrangement according to any one of claims 1 to 5, characterized in that the flanks (48) of the V-shaped recess (40) and/or the flanks (42) of the V-shaped projection (38) are spring-elastic.

7. The filter arrangement according to any one of claims 1 to 6, characterized in that the one holding member (20) is a frame member defining an opening (28) and that the second holding member (22) is formed as an annular member which by said snap connection (32) can be mounted on a small side (50) of said frame member and which comprises an annular portion (24) defining an opening (30) and having a projecting portion (31, transverse webs 26) formed thereon for reducing the opening (30) of the annular member.

8. The filter arrangement according to any one of claims 1 to 7, characterized in that the first filter element (14) is a mechanical and/or electrostatic particle filter element particularly pleated in zig-zag-shaped configuration and that the second filter element (16) is a chemical adsorption filter element.

9. The filter arrangement according to claim 8, characterized in that the particle filter element (14) comprises a reticular support structure (60) made from a plastic material and a non-woven filter layer (62) attached thereto.

10. The filter arrangement according to claim 8 or 9, characterized in that the particle filter element (14) is tightly connected to one of the two holding members (20) of the holding means (18).

11. The filter arrangement according to claim 10, characterized in that one of the two holding members (20) of the holding means (18) is provided as a plastic frame portion connected to the particle filter element (14) by being molded therearound.

12. The filter arrangement according to claim 11, characterized in that the adsorption filter element (16) comprises a layer (64) provided with active carbon.

13. The filter arrangement according to claim 12, characterized in that the active carbon layer (64) is provided with an upper and a lower non-woven cover layer (66).

14. The filter arrangement according to claim 8 and 10 or 11, characterized in that the adsorption filter element (16) is in abutment with the particle filter element (14) and is at least partially surrounded by that holding member (20) which is tightly connected to the particle filter element (14).

15. The filter arrangement according to any one of claims 1 to 14, characterized in that the abutment faces of the holding members (20,22) are arranged substantially downstream of the last filter element (16) in the flow direction (12).

16. The filter arrangement according to any one of claims 1 to 15, characterized in that the first and second holding members (20,22) are releasably connected to each other.

## Patentansprüche

1. Filteranordnung zum Filtern einer Fluidströmung mit
- einem ersten Filterelement (14),
- mindestens einem weiteren zweiten Filterelement (16),
- wobei die mindestens zwei Filterelemente (14,16) in Strömungsrichtung (12) hintereinanderliegend angeordnet sind, und
- einer Haltevorrichtung (18) zum Halten der mindestens zwei Filterelemente (14,16), wobei die Haltevorrichtung (18) mindestens ein erstes und ein zweites Halteteil (20,22) aufweist, die an Anlageflächen miteinander verbindbar sind,
**dadurch gekennzeichnet,**
- daß die mindestens zwei Halteteile (20,22) der Haltevorrichtung (18) erste und zweite Schnappverbindungsteile (38,40) zum rastenden Verbinden der mindestens zwei Halteteile (20,22) an deren im Verbindungszustand aneinander anliegenden Anlageflächen aufweisen,
- daß das eine Schnappverbindungsteil mindestens eine im wesentlichen V-förmige Vertiefung (40) mit Flanken (48), in denen sich mindestens eine Ausnehmung (46) befindet, aufweist,
- daß das andere Schnappverbindungsteil mindestens einen im wesentlichen V-förmigen Vorsprung (38) mit Flanken (42), an denen mindestens eine Vorwölbung (44) angeordnet ist, aufweist, und
- daß bei einem in eine V-förmige Vertiefung (40) eingetauchten V-förmigen Vorsprung (38) sich die mindestens eine Vorwölbung (44) des Vorsprungs (38) in der mindestens einen Ausnehmung (46) der Vertiefung (40) befindet.

2. Filteranordnung nach Anspruch 1, dadurch gekennzeichnet, daß der V-förmige Vorsprung (38) kürzer als die Tiefe der V-förmigen Vertiefung (40) ist.

3. Filteranordnung nach Anspruch 1 oder 2, dadurch gekennzeichnet, daß die Flanken (42) des V-förmigen Vorsprungs (38) und die Flanken (48) der V-förmigen Vertiefung (40) im wesentlichen relativ zueinander unter im wesentlichen gleichen Winkeln angeordnet sind.

4. Filteranordnung nach einem der Ansprüche 1 bis 3, dadurch gekennzeichnet, daß die Schnappverbindungsteile längs der Anlageflächen der mindestens zwei Halteteile (20,22) durchgehend ausgebildet sind.

5. Filteranorndung nach einem der Ansprüche 1 bis 4, dadurch gekennzeichnet, daß die mindestens zwei Halteteile (20,22) aus Kunststoff bestehen.

6. Filteranordnung nach einem der Ansprüche 1 bis 5, dadurch gekennzeichnet, daß die Flanken (48) der V-förmigen Vertiefung (40) und/oder die Flanken (42) des V-formigen Vorsprungs (38) federelastisch sind.

7. Filteranordnung nach einem der Ansprüche 1 bis 6, dadurch gekennzeichnet, daß das eine Halteteil (20) als ein eine Öffnung (28) begrenzendes Rahmenteil und daß das zweite Halteteil (22) als ein mittels der Schnappverbindung (32) an einer Schmalseite (50) des Rahmenteils anbringbares Ringteil ausgebildet ist, welches einen eine Öffnung (30) begrenzenden Ringabschnitt (24) mit einem die Öffnung (30) des Ringteils verkleinernden Vorsprungabschnitt (31, Querstreben 26) aufweist.

8. Filteranordnung nach einem der Ansprüche 1 bis 7, dadurch gekennzeichnet, daß das erste Filterelement (14) ein insbesondere zick-zack-förmig gefaltetes mechanisches und/oder elektrostatisches Partikel-Filterelement und das zweite Filterelement (16) ein chemisches Adsorptions-Filterelement ist.

9. Filteranordnung nach Anspruch 8, dadurch gekennzeichnet, daß das Partikel-Filterelement (14) ein aus einem Kunststoffmaterial bestehendes Stützgitter (60) und eine daran befestigte Filtervliesschicht (62) aufweist.

10. Filteranordnung nach Anspruch 8 oder 9, dadurch gekennzeichnet, daß das Partikel-Filterelement (14) fest mit einem der beiden Halteteile (20) der Haltevorrichtung (18) verbunden ist.

11. Filteranordnung nach Anspruch 10, dadurch gekennzeichnet, daß eines der beiden Halteteile (20) der Haltevorrichtung (18) als Kunststoff-Rahmenteil ausgebildet ist, welches durch Umspritzen des Partikel-Filterelementes (14) mit diesem verbunden ist.

12. Filteranordnung nach Anspruch 11, dadurch gekennzeichnet, daß das Adsorptions-Filterelement (16) eine mit AktivKohle versehene Schicht (64) aufweist.

13. Filteranordnung nach Anspruch 12, dadurch gekennzeichnet, daß die Aktiv-Kohle-Schicht (64) eine obere und eine untere Deck-Vliesschicht (66) aufweist.

14. Filteranordnung nach Anspruch 8 und 10 oder 11, dadurch gekennzeichnet, daß das Adsorptions-Filterelement (16) an dem Partikel-Filterelement (14) anliegt und von dem mit dem Partikel-Filterelement (14) fest verbundenen Halteteil (20) zumindest teilweise umgeben ist.

15. Filteranordnung nach einem der Ansprüche 1 bis 14, dadurch gekennzeichnet, daß die Anlageflächen der Halteteile (20, 22) im wesentlichen stromab des in Strömungsrichtung (12) betrachteten letzten Filterelements (16) angeordnet sind.

16. Filteranordnung nach einem der Ansprüche 1 bis 15, dadurch gekennzeichnet, daß die ersten und zweiten Halteteile (20,22) lösbar miteinander verbindbar sind.

## Revendications

1. Appareil de filtration pour la filtration d'un écoulement fluidique comprenant
- un premier élément (14) de filtration
- au moins un second élément (16) de filtration
- lesdits au moins deux éléments (14,16) de filtration étant disposés l'un derrière l'autre dans la direction (12) de l'écoulement, et
- un moyen (18) de soutien pour soutenir les au moins deux éléments (14,16) de filtration, ledit élément (18) de soutient comprenant au moins un premier et un second élément (20,22) de soutien qui peuvent être reliés l'un à l'autre sur leur surface de butée, caractérisés en ce que
- les au moins deux éléments (20,22) de soutien du moyen (18) de soutien comprennent un premier et un second éléments (38,40) d'assemblage à enclenchement pour produire un assemblage de verrouillage entre les ait moins deux éléments (20,22) de soutien dans leur faces en vis à vis qui sont en butée l'une contre l'autre dans l'état assemblé
- un élément d'assemblage à enclenchement comprend au moins un évidement (40) pratiquement en forme de V ayant des flancs (48) avec au moins une portion (46) évidée formée dans ceux-ci,
- l'autre élément d'assemblage à enclenchement comprend au moins une projection (38) pratiquement en forme de V ayant des flancs (42) avec ait moins une saillie (44) formée dans ceux-ci, et
- lorsqu'une projection (38) en forme de V est encastrée dans un évidement (40) en forme de V, ladite ait moins une saillie (44) de la projection (38) se trouve dans ait moins une portion (46) évidée de l'évidement (40) en forme de V.

2. Appareil de filtration selon la revendication 1, caractérisé en ce que la projection (38) en forme de V est plus courte que la profondeur de l'évidement (40) en forme de V.

3. Appareil de filtration selon la revendication 1 ou 2, caractérisé en ce que les flancs (42) de la projection (38) en forme de V et les flancs (48) de l'évidement en forme de V sont disposés selon des angles pratiquement identiques les uns par rapport aux autres.

4. Appareil de filtration selon l'une quelconque des revendications 1 à 3, caractérisé en ce que les éléments d'assemblage à enclenchement le long des côtés en butée des au moins deux éléments (20,22) de soutien sont formés en continu.

5. Appareil de filtration selon l'une quelconque des revendications 1 à 4, caractérisé en ce que les au moins deux éléments (20,22) de soutien sont faits de matière plastique.

6. Appareil de filtration selon l'une quelconque des revendications 1 à 5, caractérisé en ce que les flancs (48) de l'évidement (40) en forme de V et/ou des flancs (42) de la projection (38) en forme de V sont élastiques.

7. Appareil de filtration selon l'une quelconque des revendications 1 à 6, caractérisé en ce que l'élément (20) de filtration est un élément de cadre définissant une ouverture (28) et en ce que le second élément (22) de soutien est formé sous forme d'un élément annulaire qui, grâce audit assemblage à enclenchement (32), peut être monté sur un petit côté (50) dudit élément de cadre et qui comprend une portion annulaire (24) définissant une ouverture (30) et ayant une portion faisant saillie (31; réseaux transversaux 26) formée dessus réduisant l'ouverture (30) de l'élément annulaire.

8. Appareil de filtration selon l'une quelconque des revendications 1 à 7, caractérisée en ce que le premier élément (14) de filtration est un élément de filtration mécanique et/ou électrostatique de particules plus particulièrement plissé dans une configuration en zigzag et en ce que le second élément (16) de filtration est un élément de filtration d'adsorption chimique.

9. Appareil de filtration selon la revendication 8, caractérisé en ce que l'élément (14) de filtration de particules comprend une structure (60) de support réticulaire fabriquée à partir d'une matière plastique et une couche (62) de filtration non tissée fixée dessus.

10. Appareil de filtration selon la revendication 8 ou 9, caractérisé en ce que l'élément (14) de filtration de particules est fermement fixé à l'un des deux éléments (20) de soutien du moyen (18) de soutien.

11. Appareil de filtration selon la revendication 10, caractérisé en ce qu'un des éléments (20) de soutien du moyen (18) de soutien est prévu avec une portion de cadre en matière plastique reliée à l'élément (14) de filtration de particules en la moulant autour.

12. Appareil de filtration selon la revendication 11, caractérisé en ce que l'élément (16) de filtration par adsorption comprend une couche (64) garnie de charbon actif.

13. Appareil de filtration selon la revendication 12, caractérisé en ce que la couche (64) de charbon actif est équipée d'une couche (66) recouvrante supérieure et inférieure.

14. Appareil de filtration selon la revendication 8 et 10 ou 11, caractérisé en ce que l'élément (16) de filtration par adsorption est en butée avec l'élément (14) de filtration de particules et est au moins partiellement entouré par cet élément (20) de soutien qui est en relation étroite avec l'élément (14) de filtration de particules.

15. Appareil de filtration selon l'une quelconque des revendications 1 à 14, caractérisé en ce que les côtés en butée des éléments (20,22) de soutien sont disposés essentiellement en aval du dernier élément (16) de filtration dans la direction (12) de l'écoulement.

16. Appareil de filtration selon l'une quelconque des revendications 1 à 15, caractérisé en ce que le premier et le second éléments (20,22) de soutien sont reliés entre eux de façon amovible.
